# EUROPÄISCHE PATENTSCHRIFT

(11) **EP 1 564 022 B1**
(45) Veröffentlichungstag und Bekanntmachung des Hinweises auf die Patenterteilung: **03.09.2008**
(21) Anmeldenummer: 04005197.1
(22) Anmeldetag: 04.03.2004
(51) Int. Cl.: B42D 15/10

(54) **Passdokument mit Transponder**
Passport document with a transponder
Document pour passeport comprenant un transpondeur

(30) Priorität: 16.02.2004 DE 102004007731
(43) Veröffentlichungstag der Anmeldung: 17.08.2005
(73) Patentinhaber: Smartrac IP B.V., 1077 XX Amsterdam (NL)
(72) Erfinder: Fannasch, Lothar, Dipl.-Phys., 33647 Bielefeld (DE); Wendisch, Karl-Heinz, Dipl.-Ing., 33154 Salzkotten (DE)
(74) Vertreter: Böck, Bernhard

(56) Entgegenhaltungen:
- EP-A- 0 341 047
- EP-A- 0 364 730
- EP-A- 0 498 040
- EP-A- 1 008 459
- EP-A- 1 383 075
- WO-A-98/19870
- GB-A- 2 129 371
- US-A- 6 146 777
- US-A1- 2003 164 611
- US-A1- 2003 168 514

## Beschreibung

Die Erfindung betrifft ein Passdokument mit zwei Deckblättern gemäß dem Oberbegriff des Anspruchs 1.

Ferner betrifft die Erfindung ein Verfahren zur Herstellung eines Passdokumentes gemäß dem Oberbegriff des Anspruchs 8.

Aus der DE 203 06 145 U1 ist ein Passdokument mit zwei relativ starren Deckblättern und einer Mehrzahl von Einlegeblättern bekannt, das als Reisepass die Identität bzw. Nationalität des Passinhabers für Reisen ins Ausland ausweist. Das bekannte Passdokument weist neben den für Sichtvermerke und Visa vorgesehenen Einlegeblättern aus Papier ein Passblatt auf, das eine fotografische Information des Passinhabers sowie weitere den Passinhaber kennzeichnende aufgedruckte Daten als optische Personalisierungsdaten enthält. Die Personalisierungsdaten sind üblicherweise durch Bedrucken auf einer Papierlage aufgebracht, die zwischen Deckschichten aus Kunststoff einlaminiert ist. Das Passblatt weist die Flächendimension der Einlegeblätter auf und ist zusammen mit denselben und den Deckblättern an einer gemeinsamen Seitenkante fixiert, so dass das Passdokument wie ein Heft zur Kontrolle der Identität des Passinhabers bzw. zum Anbringen von Sichtvermerken aufgeschlagen werden kann.

Aus der US 2003/0168514 ist ein Passdokument sowie ein Verfahren zur Herstellung eines Passdokuments bekannt, bei dem in einem Deckblatt eines Passdokuments eine Transponderlage integriert ist, die mit einer auf einer Substratschicht angeordneten Antennenspule versehen ist. Die Substratschicht des bekannten Passdokuments besteht aus einem Papiermaterial, dass zur Ausbildung der Antennenspule in einem Bedruckungsverfahren mit leitender Tinte bedruckt ist. Die bei dem bekannten Passdokument verwendete Transponderlage ist in einem relativ dicken Deckblatt angeordnet und dadurch gegen Biegebeanspruchungen geschützt.

Der vorliegenden Erfindung liegt die Aufgabe zugrunde, ein Passdokument und ein Verfahren zu dessen Herstellung vorzuschlagen, das eine beliebige Anordnung der Transponderlage, wahlweise in einem Deckblatt oder in einem Passblatt ermöglicht.

Zur Lösung dieser Aufgabe weist das erfindungsgemäße Passdokument die Merkmale des Anspruchs 1 auf.

Der besondere Vorteil des erfindungsgemäßen Passdokumentes besteht darin, dass sowohl die elektronischen Personalisierungsdaten als auch die optischen Personalisierungsdaten in einem gemeinsamen Blatt des Passdokumentes integriert sind. Hierdurch kann zum einen der Herstellungsaufwand verringert werden. Zum anderen kann einem möglichen Missbrauch im Herstellungsprozess vorgebeugt werden, da die sicherheitsrelevanten Daten in einem gemeinsamen Körper (Passblatt) zum Fixieren der Blätter des Passdokumentes bereitgestellt werden. Vorteilhaft weist die Transponderlage eine Substratschicht aus einem Gewebematerial auf, so dass das Passblatt relativ flexibel ist. Die Biegeeigenschaften des herkömmlichen Passblattes werden hierdurch nicht wesentlich beeinträchtigt.

Nach einer bevorzugten Ausführungsform der Erfindung ist die Gewebe-Transponderlage an den Oberflächen mit einer anregbaren Klebeschicht versehen, so dass auf beiden Seiten eine innige Verbindung mit beispielsweise einer Papierlage und einer Deckschicht ermöglicht wird.

Vorteilhaft können die optischen und elektronischen Personalisierungsdaten in einem unzerstörbaren Blatt zusammengefasst werden, wobei die strapazierfähigen, transparenten Kunststoff-Deckschichten sowohl die Transponderlage als auch die Papierlage schützt.

Nach einer Weiterbildung der Erfindung überstreichen die Transponderlage und die Papierlage die gleiche Fläche, so dass das Passblatt relativ homogene Biegeeigenschaften aufweist.

Nach einer Weiterbildung der Erfindung ist ein Transpondermodul bestehend aus einer Transponderlage und mit einer jeweils an den Oberflächen derselben angeordneten Gewebeschicht vorgesehen, das als Zwischenprodukt bereitgestellt wird, um dann zusammen mit der Papierlage einlaminiert zu werden. Das Einlaminieren erfolgt am Herstellungsort des Passdokumentes, an dem auch die elektronische Personalisierung, das heißt das Einbringen der elektronischen Personalisierungsdaten in den Transponder und das Zuordnen derselben zu den optischen Personalisierungsdaten, die auf der Papierlage durch Bedrucken aufgebracht sind, vorgenommen wird.

Zur Lösung der Aufgabe weist das erfindungsgemäße Verfahren die Merkmale des Anspruchs 8 auf.

Der besondere vorteil des erfindungsgemäßen Verfahrens besteht darin, dass in einem Verarbeitungsschritt die optischen Personalisierungsdaten und die elektronischen Personalisierungsdaten in ein Passblatt zusammengeführt werden. Das Zusammenführen erfolgt durch Laminieren der mit einer Substratschicht aus einem Gewebematerial versehenen Transponderlage mit der Papierlage, wobei eine schützende transparente Kunststoff-Deckschicht gebildet wird. Das hierdurch relativ flexibel ausgebildete Passblatt kann dann zusammen mit weiteren Einlegeblättern bzw. Deckblättern zur Bildung eines Passdokumentes an einer gemeinsamen Seitenkante miteinander verbunden werden.

Nach einer Weiterbildung des erfindungsgemäßen Verfahrens kann das Fixieren der Blätter durch Vernähen erfolgen, wobei vorzugsweise das Passblatt über die Transponderlage oder die Kunststoff-Deckschicht mit den weiteren Blättern fixiert ist.

Ausführungsbeispiele der Erfindung werden nachfolgend anhand der Zeichnungen näher erläutert.

Es zeigen:
- Figur 1: eine schematische Darstellung eines aufgeschlagenen Passdokumentes, wobei ein Passblatt mit aufgedruckten optischen Personalisierungsdaten sichtbar ist,
- Figur 2: eine Draufsicht auf ein Transpondermodul,
- Figur 3: einen Querschnitt durch das mehrschichtige Transpondermodul gemäß Figur 2 und
- Figur 4: eine schematische Darstellung eines mehrschichtigen Aufbaus des Passdokumentes unmittelbar nach dem Fixieren der Blätter.

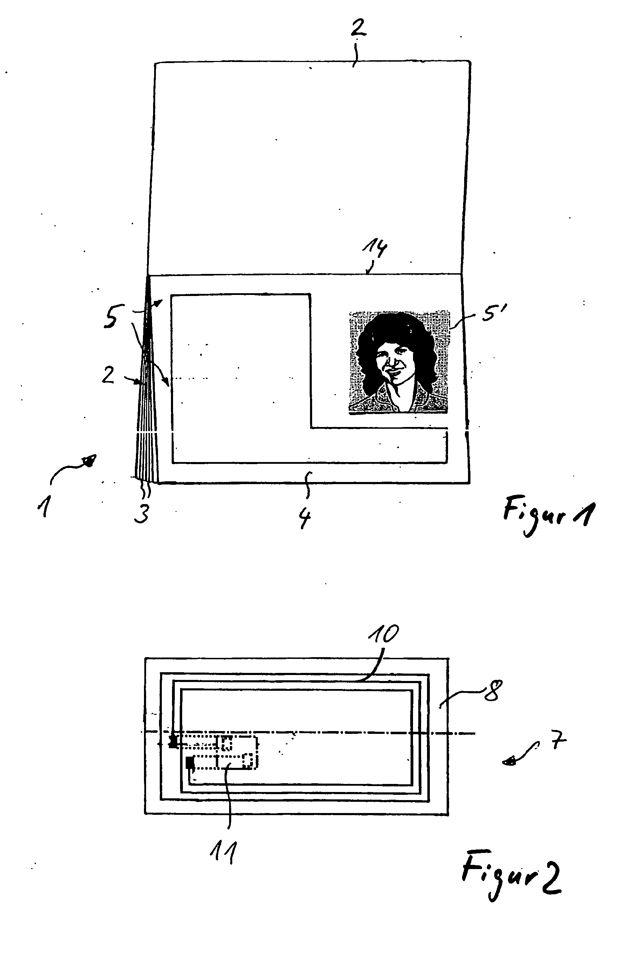

Ein Passdokument 1 (Reisepass) nach einer bevorzugten Ausführungsform der Erfindung gemäß Figur 1 besteht im Wesentlichen aus zwei relativ steifen äußeren Deckblättern 2, einer Mehrzahl von jeweils aus einem Sicherheitspapier bestehenden Einlegeblättern 3 für das Aufbringen von Sichtvermerken bzw. Visa sowie aus einem Passblatt 4, in dem Personalisierungsdaten enthalten sind zur Identifikation des Passinhabers.

Als optische Personalisierungsdaten sind Kennungsdaten 5, wie beispielsweise das Land, der Name, das Geburtsdatum bzw. der Geburtsort des Passinhabers sowie ein Foto 5' und eine Unterschrift desselben auf einer Papierlage 6 des Passblattes 4 aufgedruckt. Die Papierlage 6 kann als Sicherheitspapier ausgebildet sein, auf dem neben den Kennungsdaten 5 Sicherheitselemente, wie beispielsweise Guillochen oder Wasserzeichen aufdruckbar sind. Die Kennungsdaten 5 bzw. die Sicherheitselemente können beispielsweise durch Tiefdrucken, Hochdrucken, Offsetdrucken oder Siebdrucken aufgebracht werden.

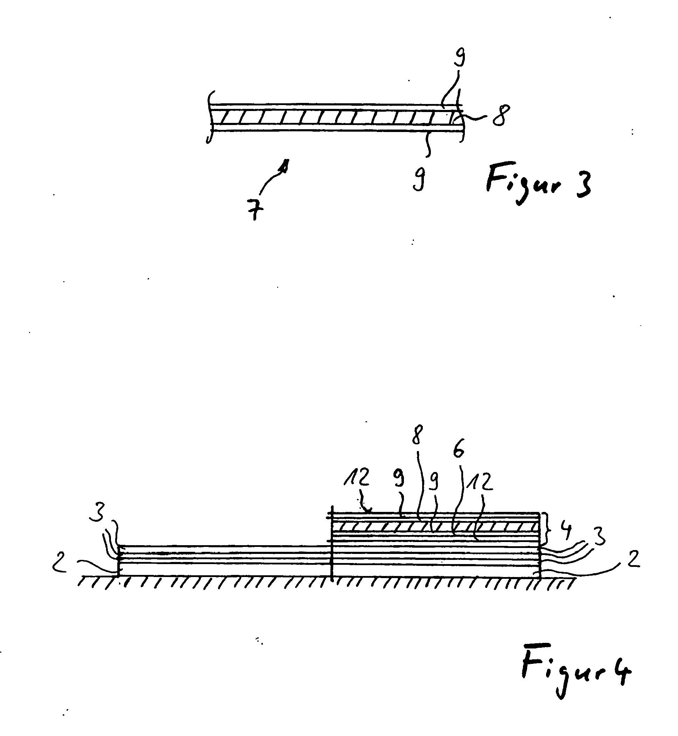

Weiterhin enthält das Passblatt 4 ein nach außen hin nicht sichtbares Transpondermodul 7, wie es in den Figuren 2 und 3 dargestellt ist. Das Transpondermodul 7 weist zum einen eine mittlere Transponderlage 8 sowie eine zu beiden Seiten der Transponderlage 8 aufgebrachte Klebeschicht 9 auf. Die Transponderlage 8 weist eine Substratschicht aus Gewebematerial auf, auf der haftend eine Antennenspule 10 und ein Chip 11 aufgebracht sind. Das hierbei verwendete Haftmittel ermöglicht eine planare Oberfläche der Transponderlage 8 auf der Seite, auf der die Antennenspule 10 und der Chip 11 aufgebracht sind. Das Haftmittel ist als eine thermoplastische Zusatzbeschichtung ausgebildet, die bereits vor Aufbringen der Antennenspule 10 bzw. des Chips 11 eine Schicht auf der Gewebe-Substratschicht bildet. Die Antennenspule 10 wird durch Verlegen eines Spulendrahtes auf die thermoplastische Zusatzbeschichtung aufgebracht.

Die auf die Transponderlage 8 aufgebrachte Klebeschicht 9 kann aus einem thermisch anregbaren oder durch ultraviolette Strahlung anregbaren oder durch Druck anregbaren Kleber ausgebildet sein. Die Klebeschicht 9 ist in der Lage, während eines Laminationsvorganges eine innige und feste Verbindung der Transponderlage 8 mit der Papierlage 6 sowie einer das Passblatt 4 schützenden Deckschicht 12 aus Kunststoff zu ermöglichen.

Wie aus Figur 4 zu ersehen ist, werden die als Rollenware bereitgestellten Lagen des Passdokumentes 1 in einem vorgesehenen Format zugeschnitten und als Blätter 2, 3, 4 übereinandergelegt, wobei sie entlang einer Mittelebene 13 durch Vernähen miteinander fixiert werden. Die Mittelebene 13 bildet ein Scharnier, das in herkömmlicher Weise ein Blättern des Passdokumentes 1 ermöglicht.

Zu Herstellung des Passblattes 4 werden in einem ersten Schritt die Transponderlage 8 und die Papierlage 6 aneinandergelegt. Nachfolgend wird sowohl auf die freie Seite der Transponderlage 8 als auch auf die freie Seite der Papierlage 6 die aus einem transparenten Kunststoff bestehende Deckschicht 12 angelegt. Durch nachfolgendes Laminieren werden die Papierlage 6 und die Transponderlage 8 fest miteinander verbunden und zugleich durch eine schützende Deckschicht 12 angedeckt.

In dem vorliegenden Ausführungsbeispiel sind die beiden außen liegenden Deckschichten 12 des Passblattes 4 verbreitert ausgebildet, so dass sie eine mittlere Seitenkante 14 des Passblattes 4 bilden, die mit den inneren Seitenkanten der Einlegeblätter 3 bzw. der Deckblätter 2 in der Mittelebene 13 fixiert sind.

Es versteht sich, dass die Blätter 2 und 3 passgenau übereinandergeführt werden, so dass nachfolgend in der Mittelebene 13 das Scharnier gebildet werden kann.

Das Einbringen der elektronischen Personalisierungsdaten in das Transpondermodul 7 kann vor oder nach dem Fixieren der Blätter 2, 3, 4 erfolgen. Dabei werden in den Chip 11 geometrische Merkmale und/oder digitale Signaturen und/oder die auf der Papierlage 6 sichtbaren Kennungsdaten 5 in elektronischer Form abgespeichert.

Nach einer weiteren nicht dargestellten Ausführungsform der Erfindung kann das Transpondermodul 7 auch in dem Deckblatt 2 des Passdokumentes 1 integriert sein. Dabei können die durch Bedruckung hergestellten optischen Personalisierungsdaten oder optischen Sicherheitselemente auch auf einer Seite des Deckblattes 2 angeordnet sein oder auf einem der Einlegeblätter 3 enthalten sein.

## Patentansprüche

1. Passdokument mit zwei Deckblättern, mit einer Mehrzahl von für Sichtvermerke und Visa vorgesehenen Einlegeblättern und mit einem die Personalisierungsdaten des Passinhabers visualisierendem Passblatt mit einer transparenten Deckschicht aus Kunststoffmaterial, wobei die Deckblätter, die Einlegeblätter und das Passblatt an einer gemeinsamen Seitenkante miteinander fest verbunden sind und in dem Passblatt (4) oder in einem Deckblatt (2) eine Transponderlage (8) integriert ist, die mit einer auf einer Substratschicht angeordneten Antennenspule versehen ist,
**dadurch gekennzeichnet,**
**dass** die Substratschicht der Transponderlage aus einem Gewebematerial gebildet ist und die Antennenspule (10) durch Verlegen eines Spulendrahts auf einer thermoplastischen zusatzbeschichtung des Gewebematerials ausgebildet ist.

2. Passdokument nach Anspruch 1,
**dadurch gekennzeichnet,**
**dass** die Transponderlage (8) an mindestens einer Oberfläche mit einer anregbaren Klebeschicht (9) versehen ist zur Verbindung durch Wärme und Druck mit einer die optischen Personalisierungsdaten des Passinhaber enthaltenden Papierlage (6) und/oder mit der transparenten Deckschicht.

3. Passdokument nach Anspruch 2,
**dadurch gekennzeichnet,**
**dass** die Klebeschicht (9) thermisch anregbar oder durch ultraviolette Strahlung anregbar oder durch Druck anregbar ausgebildet ist.

4. Passdokument nach einem der Ansprüche 1 bis 3,
**dadurch gekennzeichnet,**
**dass** die Papierlage (6) aus einem bedruckbaren Sicherheitspapier gebildet ist.

5. Passdokument nach einem der Ansprüche 1 bis 4,
**dadurch gekennzeichnet,**
**dass** die Fläche der Transponderlage (8) und die Fläche der Papierlage (6) und die Fläche der Deckschicht (12) im Wesentlichen zu der Fläche der Einlegeblätter (3) korrespondieren.

6. Passdokument nach einem der Ansprüche 1 bis 5,
**dadurch gekennzeichnet,**
**dass** lediglich die Deckschicht (12) oder die Transponderlage (8) zusammen mit den Einlegeblättern (3) und den Deckblättern (2) an einem gemeinsamen Scharnier (13) fest miteinander verbunden sind.

7. Transpondermodul zum Einbringen in ein Passdokument nach einem der Ansprüche 1 bis 6,
**dadurch gekennzeichnet,**
**dass** das Transpondermodul (7) zum einen eine Transponderlage (8) mit einer Antennenspule (10) und einem Chip (11) aufweist, die haftend auf einer Substratschicht aus Gewebematerial aufgebracht sind, und zum anderen an mindestens einer Deckseite der Transponderlage (8) eine anregbare Klebeschicht (9) aufweist.

8. Verfahren zur Herstellung eines Passdokuments, wobei zwei Deckblätter, eine Mehrzahl von Einlegeblättern und ein in Kunststoffmaterial einlaminiertes Passblatt passgenau übereinander geführt und an einer Seitenkante (14) fixiert werden, wobei das Passblatt (4) vor oder während des Fixierens an der Seitenkante (14) durch Laminieren hergestellt wird, wobei Wärme und Druck auf eine Substratschicht sowie eine Antennenspule (10) und eine einen Chip (11) aufweisende Transponderlage (8), eine zu der Transponderlage (8) benachbarte Klebeschicht (9), eine die optischen Personalisierungsdaten enthaltene Papierlage (6) und auf eine transparente außenseitige Deckschicht (12) einwirkt,
**dadurch gekennzeichnet,**
**dass** als Substratschicht ein Gewebematerial verwendet wird und die Antennenspule durch Verlegen eines Spulendrahts auf einer thermoplastischen zusatzeschichtung des Gewebematerials ausgebildet wird.

9. Verfahren nach Anspruch 8,
**dadurch gekennzeichnet,**
**dass** die Deckblätter (2) und die Einlegeblätter (3) und dass Passblatt (4) durch Vernähen fixiert werden.

10. Verfahren nach Anspruch 8 oder 9,
**dadurch gekennzeichnet,**
**dass** von dem Passblatt (4) lediglich die Transponderlage (8) oder die Deckschicht (12) durch Vernähen mit den Einlegeblättern (3) und den Deckblättern (2) fixiert wird.

## Claims

1. An identification document comprising two covering sheets, a plurality of inserted sheets for stamps and visas and an identification sheet displaying the personal data of the holder of said document and being provided with a transparent covering layer consisting of a plastic material, wherein the covering sheets, the inserted sheets and the identification sheet are connected to a common lateral edge in a fixed manner, and a transponder layer (8) being provided with an antenna coil arranged on a substrate layer is integrated in the identification sheet (4) or in the covering sheet (2),
**characterised in that**
the substrate layer of the transponder layer is formed of a fabric material and the antenna coil (10) is formed by laying a coil wire on a thermoplastic additional coating of the fabric material.

2. The identification document according to claim 1,
**characterised in that**
the transponder layer (8) is provided with an excitable adhesive layer (9) on at least one surface for connection by heat and pressure to a paper layer (6) containing the optical personal data of the document holder and/or to the transparent covering layer.

3. The identification document according to claim 2,
**characterised in that**
the adhesive layer (9) is embodied so that it is thermally excitable or excitable by ultraviolet radiation or excitable by pressure.

4. The identification document according to any one of claims 1 to 3,
**characterised in that**
the paper layer (6) is formed from a printable security paper.

5. The identification document according to any one of claims 1 to 4,
**characterised in that**
the area of the transponder layer (8) and the area of the paper layer (6) and the area of the covering layer (12) substantially correspond to the area of the inserted sheets (3).

6. The identification document according to any one of claims 1 to 5,
**characterised in that**
only the covering layer (12) or the transponder layer (8) together with the inserted sheets (3) and the covering sheets (2) are fixedly interconnected at a common hinge (13).

7. A transponder module for insertion in an identification document according to any one of claims 1 to 6,
**characterised in that**
the transponder module (7) firstly comprises a transponder layer (8) comprising an antenna coil (10) and a chip (11) which are adhesively applied to a substrate layer consisting of fabric material and secondly comprises an excitable adhesive layer (9) on at least one covering side of the transponder layer (8).

8. A method for producing an identification document, wherein two covering sheets, a plurality of inserted sheets and an identification sheet laminated in plastic material are guided into position above one another and fixed to a lateral edge (14), wherein the identification sheet (4) is produced by laminating before or during fixing on the lateral edge (14), wherein heat and pressure act on a substrate layer and a transponder layer (8) comprising an antenna coil (10) and a chip (11), on an adhesive layer (9) adjacent to the transponder layer (8), on a paper layer (6) containing the optical personal data and on a transparent external covering layer (12),
**characterised in that**
a fabric material is used as the substrate layer and the antenna coil is formed by laying a coil wire on a thermoplastic additional coating of the fabric material.

9. The method according to claim 8,
**characterised in that**
the covering sheets (2) and the inserted sheets (3) and the identification sheet (4) are fixed by sewing on a machine.

10. The method according to claim 8 or claim 9,
**characterised in that**
from the identification sheet (4) only the transponder layer (8) or the covering layer (12) is fixed by sewing with the inserted sheets (3) and the covering sheets (2).

## Revendications

1. Document d'identité, avec deux feuillets de couverture, avec une pluralité de feuillets intermédiaires à insérer prévus pour des mentions et des visas et avec un feuillet d'identité visualisant les données der personnalisation du détenteur du passeport, avec une couche de protection transparente en matière plastique, les feuillets de couverture, les feuillets intermédiaires à insérer et le feuillet d'identité étant solidarisés de manière fixe sur une arête latérale commune et une couche à effet transpondeur (8) qui est munie d'une bobine d'antenne disposée sur une couche de substrat étant intégrée dans le feuillet d'identité (4) ou dans l'une des feuillets de couverture (2)
**caractérisé en ce que**,
la couche de substrat de la couche à effet transpondeur est formée dans un matériau tissé et **en ce que** la bobine d'antenne (10) est réalisée par pose d'un fil à bobiner sur un revêtement supplémentaire thermoplastique du matériau tissé.

2. Document d'identité selon la revendication 1,
**caractérisé en ce que**,
la couche à effet transpondeur (8) est munie sur au moins une surface d'une couche adhérente (9) susceptible d'être excitée pour la liaison par chaleur et par pression avec une couche de papier (6) contenant les données de personnalisation optiques du détenteur du passeport et/ou avec la couche de protection transparente.

3. Document d'identité selon la revendication 2,
**caractérisé en ce que**,
la couche adhérente (9) est conçue pour être susceptible d'être thermiquement excitée ou excitée par rayonnement ultraviolet ou excitée par pression.

4. Document d'identité selon l'une quelconque des revendications 1 à 3,
**caractérisé en ce que**,
la couche de papier (6) est formée en un papier de sécurité imprimable.

5. Document d'identité selon l'une quelconque des revendications 1 à 4,
**caractérisé en ce que**,
la surface de la couche à effet transpondeur (8) et la surface de la couche de papier (6) et la surface de la couche de protection (12) correspondent sensiblement à la surface des feuillets intermédiaires à insérer (3).

6. Document d'identité selon l'une quelconque des revendications 1 à 5,
**caractérisé en ce que**,
uniquement la couche de protection (12) ou la couche à effet transpondeur (8) ensemble avec les feuillets intermédiaires (3) et les feuillets de couverture (2) sont solidarisées de manière fixe sur une charnière (13) commune.

7. Module à effet transpondeur, destiné à être introduit dans un document d'identité selon l'une quelconque des revendications 1 à 6,
**caractérisé en ce que**,
le module à effet transpondeur (7) comporte d'une part une couche à effet transpondeur (8) avec une bobine d'antenne (10) et une puce (11) qui sont appliquées par adhérence sur une couche de substrat en matériau tissé, et comporte d'autre part sur au moins une face de couverture de la couche à effet transpondeur (8) une couche adhérente (9) susceptible d'être excitée.

8. Procédé de fabrication d'un document d'identité, deux feuillets de couverture, une pluralité de feuillets intermédiaires et un feuillet d'identité incorporé par laminage dans de la matière plastique étant guidés en coïncidence et fixés sur une arête latérale (14), le feuillet d'identité (4) étant fabriqué par laminage avant ou pendant la fixation sur l'arête latérale (14), de la chaleur et de la pression agissant sur une couche de substrat ainsi que sur une bobine d'antenne (10) et une couche à effet transpondeur (8) comportant une puce (11), sur une couche adhérente (9) voisine de la couche à effet transpondeur (8), sur une couche de papier (6) comportant les données de personnalisation optiques et sur une couche de protection extérieure transparente (12),
**caractérisé en ce que**,
en tant que couche de substrat on utilise un matériau tissé et on forme la bobine d'antenne par pose d'un fil à bobiner sur un revêtement supplémentaire thermoplastique du matériau tissé.

9. Procédé selon la revendication 8,
**caractérisé en ce que**,
on fixe les feuillets de couverture (2) et les feuillets intermédiaires (3) et le feuillet d'identité (4) en les cousant.

10. Procédé selon la revendication 8 ou 9,
**caractérisé en ce que**,
du feuillet d'identité (4), on fixe uniquement la couche à effet transpondeur (8) ou la couche de protection (12) en les cousant avec les feuillets intermédiaires à insérer (3) et les feuillets de couverture (2).
